# EUROPEAN PATENT SPECIFICATION

(11) **EP 2 035 350 B1**
(45) Date of publication and mention of the grant of the patent: **21.10.2009**
(21) Application number: 07789014.3
(22) Date of filing: 22.06.2007
(51) Int. Cl.: C04B 41/88, C03B 5/43, C23C 4/02, C23C 4/08

(54) **REFRACTORY METALLIC OXIDE CERAMIC PART HAVING PLATINUM GROUP METAL OR PLATINUM GROUP METAL ALLOY COATING**
MIT EINEM PLATINGRUPPENMETALL ODER EINER PLATINGRUPPENMETALL-LEGIERUNG BESCHICHTETES FEUERFESTES METALLOXID-KERAMIK-ELEMENT
ÉLÉMENTS CÉRAMIQUES RÉFRACTAIRES D'OXYDE MÉTALLIQUE REVÊTUS D'UN MÉTAL DU GROUPE PLATINE OU D'UN ALLIAGE D'UN MÉTAL DU GROUPE PLATINE

(30) Priority: 23.06.2006 GB 0612399
(43) Date of publication of application: 18.03.2009
(73) Proprietor: Johnson Matthey Public Limited Company, London EC1N 8EE (GB)
(72) Inventor: COUPLAND, Duncan, Roy, High Wycombe HP11 1EA (GB); WILKINSON, Roger, Charles, Sawston Cambridge CB22 3HL (GB)
(74) Representative: Wishart, Ian Carmichael
(86) International application number: PCT/GB2007/002326
(87) International publication number: WO 2007/148104

(56) References cited:
- EP-A- 0 559 330
- US-A- 5 435 889
- US-A- 5 465 780

## Description

The present invention concerns improvements in coated materials, and more especially concerns platinum group metal-coated ceramics.

Slip-cast and sintered ceramic refractories are used extensively as parts for the handling of aggressive materials such as molten glass. Such sintered ceramic refractories are generally manufactured by forming a dense slurry of the refractory oxide, optionally in the presence of inorganic binding agents, casting the slurry in a mould and sintering the resulting cast item. Such refractories are considered to be of low density, and generally exhibit up to 15-20% of interconnecting porosity. Chemically, such refractories are mixtures of two or more of silica, alumina and zirconia, although other oxide components such as magnesia may be present, plus additives and impurities that may promote sintering etc.

We have shown that such refractories may be given additional protection by coating with platinum using a thermal spraying method (see EP 0 559 330). This technology has met with considerable commercial success. However, there exists another class of refractory materials known as engineering or high density refractories, which includes those made from fine grained ceramic powders made by ramming and iso-static and hydro-static pressing, and fusion-cast refractories. These possess very different physical and physicochemical properties from the low density slipcast and sintered refractories described above, despite the fact that in chemical composition they may be very closely related. These refractories are characterised by their very high density and possession of at most 3% porosity at low levels of interconnectivity, and exhibition of a hard, smooth external surface.

In the specific case of fusion-cast refractories, the chemical constituents are generally fused by electric arc melting using graphite electrodes, and cast into moulds or flowed onto enclosed surfaces. The fusion-cast refractories find widespread use as furnace lining blocks and channel blocks and in furnace and reaction vessel linings (sometimes called "glass-lined vessels") and generally exhibit improved resistance to corrosion or erosion compared to low density refractories. The same is also true for the less commonly used pressed, engineering refractories mentioned above.

Although fusion-cast refractories and the pressed engineering refractories exhibit high performance in use, under extreme conditions they are still prone to attack and ultimate destruction. For example, in glass-melting furnaces, even these high performance refractories are subject to attack at or below the line of molten glass. The lifetime of such components is determined by temperature, glass-type and the amount of glass processed. Damage to these refractories, because of their use in strategic locations, can lead to the need for partial or even complete shut-down of the furnace and loss of production.

As a result of the smooth, low porosity surface of fusion-cast and pressed refractories, it has generally been found to be very difficult to satisfactorily coat such materials with protective materials such as the noble metals. Methods of keying the surface of low density refractories, such as grit blasting, machining, de-greasing using solvents or etching using mineral acids, are ineffective in providing a suitable surface for bonding noble metal coatings to fusion-cast refractories. The deposition of a plasma-sprayed intermediate layer of ceramic oxide has been suggested as necessary in the coating of hard, high density refractories, prior to plasma flame spraying with platinum, in US 4,159,3 53. The reason for utilising such an intermediate oxide layer is that neither grit blasting or chemical etching such hard dense refractories has sufficiently roughened the surface to allow an adherent mechanical bonding of the platinum to the refractory. Another characteristic peculiar to the fusion cast refractories, which makes adhesion of any protective coating problematical is their tendency to exude a glassy phase during exposure to high temperatures. To our knowledge, there has never been any successful, commercial, method of platinum coating fusion-cast refractory parts directly, with or without an intermediate oxide coating. The same is also true for the high density iso-statically and hydro-statically pressed engineering refractories.

There has been a demand for many years, therefore, for platinum-coated fusion-cast and engineering refractory parts, which has been impossible to satisfy with known technologies. The Applicants also failed, in their own initial tests, to achieve consistent and adequate adhesion of a flame-sprayed platinum coating.

The surface texturing of some materials such as steel, ceramics such as quartz and alumina, glasses, polymers and composites using a power beam has been disclosed in WO 02/094497. That document suggests adhering another member to a treated workpiece, but does not consider the application of metal films. Surface texturing prior to applying a coating is also taught in USP 5,435,889, where the substrate is a composite which is termed a "ceramic composite". This document is clearly directed primarily at carbon-carbon composites as the "ceramic". The coating is designed to protect the carbon-carbon composite from oxidation, and accordingly coating thicknesses of 10-50 microns are recommended. The application of coatings to metallic-oxide-based ceramics is neither described nor contemplated.

The present invention is believed to be applicable not just to fusion-cast and engineering ceramics for the glass industry, but to supported or unsupported ceramics and glasses which exhibit the same characteristics of at least a dense, low-porosity surface to which sprayed metals or similarly deposited metal films, show poor adhesion. All such materials are to be considered as metallic-oxide ceramic refractories within the scope of the present invention.

The present invention provides a refractory metallic-oxide ceramic part suitable for use in the processing of molten glass, said part possessing at least one surface area having a surface drilled to develop an array of slots or closed-end holes, and in which at least a portion of such treated surface carries a platinum group metal or platinum group metal alloy coating pegged thereto by the mechanical interaction between metal pegs formed as part of said coating and positioned within said slots or holes and the ceramic walls and bases of said slots or holes.

Initial treatment tests have been carried out using a commercial electron beam (EB) gun and vacuum chamber, which was able to produce a wide range of surface profiles and patterns. The specific conditions used for creating the various surfaces were controllable and reproducible but are believed to be equipment-specific and would need to be defined for each unit initially by trial and error by reference to the profiles developed. Although the profiles created using the EB gun were found to be very suitable for platinum coating, the problems anticipated with handling very large ceramic blocks, of up to and in excess of 1 Tonne weight, into and out of the vacuum chamber required an additional solution. Subsequent tests indicate that a suitable industrial laser can have substantially the same effect, is operational in a normal air atmosphere, and by using a fibre-optic delivery system attached to a multi- axis positioning system, the laser profiling can be achieved on both planar and non-planar surfaces. In either case a pattern of cut blind holes or indentations or slots can be achieved on a macroscopic scale, which is effective to give a keyed surface to which flame-sprayed metal adheres surprisingly well. It is not necessary for any of the blind holes, indentation or slots to have a re-entrant shape. It is not believed that the profile pattern is significant in achieving the remarkable results of the present invention, and it is thought that almost any regular, irregular or even random profile is effective.

Desirably, the holes have a depth to diameter ratio of greater than one, preferably from 3 to 6, and slots have a width to diameter ration of greater than one. Holes desirably have a diameter at the surface of the ceramic of 200 to 500 microns. Slots desirably have a length to depth ratio of less than three; slots preferably have a width of 200 to 500 microns at the surface of the ceramic.

Slots need not be simple slots but may incorporate one or more changes in direction, and may intersect.

The spacing of holes or slots in an array may be determined according to the particular ceramic by routine experiment, but this is suitably less than 20 times the hole diameter. A preferred linear spacing is approximately 1 mm.

Physical observations of treated ceramic surfaces indicate that some material is moved during the process. Depending on the conditions of the process, material may be completely or partially ejected from regions of greatest beam impingement. This moved material can be lost to the surface under treatment or may reform in an adjacent region. Experience shows that such ejected material can have a structure suitable for good bonding to the flame sprayed coating, but may also be too smooth, with this being controlled by composition and conditions during ejection. Where deposits are smooth it may be desirable to remove them by grit blasting before metal coating is carried out.

The invention also provides a method of metal coating a metallic-oxide refractory ceramic part, comprising treating at least one surface area of said part using a high energy beam to remove a portion of surface area, to form a plurality of slots or closed-end holes which form an effective bonding surface, and subsequently depositing a coating of a platinum group metal or alloy thereof, onto the bonding surface to provide mechanical interaction between metal pegs formed as part of said coating and positioned within said slots or holes and the ceramic walls and bases of said slots or holes. One surprising aspect of the experimental work has been the discovery that the flame or plasma sprayed metal penetrates deeply into the patterns cut by the energy beam and fills them without developing local through coating porosity. During the original development of platinum group metal coating of ceramics it was identified that porosity and holes in the surface of ceramics were extremely difficult to close during coating, and pre- and post coating methods were developed to avoid this being a problem in service. However, this is not this case for these engineered "holes" and they develop "posts" or pegs of sprayed metal material which are believed to then provide the additional bond strength to allow useful, adherent coatings to be achieved.

The metals useful in the present invention are one or more of the platinum group metals, namely platinum, rhodium, palladium, ruthenium, iridium and osmium, and alloys with each other or with base metals. Preferably, the metal is platinum, an alloy of platinum, eg Pt5%Au, Pt10%Ir, Pt10%Rh, Pt5%Ru, or Pt with up to 1%Zr, or grain stabilised Pt or Pd.
For ease of description, however, this description will frequently use only the term "platinum" or "platinum-coated".

The refractory part may be of any of the conventional fusion-cast refractory or pressure formed engineering refractory compositions, incorporating one or more of SiO₂, Al₂O₃, ZrO₂ and MgO₂, optionally including amounts of other refractory oxides such Cr₂O₃. Preferred fusion-cast refractories are those known as AZS refractories (AZS = alumina/zirconia/silica). Such high density engineering refractories are not defined by nomenclature but by suitability for the most arduous glass furnace applications. Other similar refractory parts, such as fusion-cast chromias, may be platinum-coated using the present invention.

In the casting process, zirconia has the highest melting point of the regular components of an AZS refractory, and tends to crystallise preferentially at the surface of the mould. This can result in the surface of the fusion-cast part not being representative of the bulk material, and can be less amenable to treatment. It may be desirable in such cases that the surface of the part is machined to expose bulk AZS material; in manufacturing certain parts this was done conventionally as part of the manufacturing process.

In a modification of the present invention, one or more intermediate metal oxide and/or metal layers may be applied, using conventional methods or methods known *per se*.

The platinum group metal may be deposited on the surface of the refractory part in a number of different ways. A preferred method is by combustion flame spraying in a method analogous to that described in EP 0 559 330. Other methods include plasma flame spraying, and high velocity oxy-fuel combustion spraying. Further methods may be developed without departing from the scope of the present invention, and, for certain uses, sputtering or CVD may be appropriate.

The metal coating desirably has a thickness of 50 microns up to 2mm (the thickness is probably limited only by the economics). More desirably, the thickness is 50 to 500 microns, suitably about 200 microns.

It should be realised that although excellent results may be achieved according to the invention by treating and coating essentially all exposed surfaces of the fusion-cast or iso-statically/hydrostatically pressed engineered ceramic, for many uses it may be sufficient and economical to treat and coat only a proportion of the surface. For example, in glass-melting furnaces, or other furnaces exposed to similarly aggressive conditions, erosion takes place in a relatively small area at the normal line of molten glass. For such furnaces or vessels, the invention permits coating those regions most at risk.

Early indications are that platinum-coated fusion cast refractory and high density engineered refractory ceramic parts according to the invention are corrosion resistant at temperatures of up to 1600-1650° C. This can increase the processing options and materials available to furnace users.

Whilst the initial use of the invention is in the protection of ceramic parts used in a furnace, it is also contemplated that the platinum group metal film may be connected to a source of electricity in a manner that permits resistance heating of the film. This can permit good temperature control of furnace contents and may reduce viscosity of furnace contents such as molten glass, in appropriate parts of the furnace.

In a further modification of the present invention it has been found that high energy beam treatment or "drilling" of sintered metallic oxide refractories can provide surfaces for very high strength bonds with platinum group metal and alloy coatings. Although such refractory materials are usually easy to prepare for coating, and perfectly satisfactory coatings are usually achieved, there are some specific circumstances where this adhesion is insufficient. The particular circumstance arises when hot-sprayed coatings are required on some internal curved surfaces. This type of component is geometrically challenging, as the stresses that develop in the coating during deposition, may resolve to create a tensile load across the ceramic/coating interface. Without extreme measures these stresses can be sufficient to cause delamination of the coating, to a degree which would promote failure in service. Although methodologies have been developed to overcome this geometric effect, these are costly to apply, and uncertainty always exists. It has been found that the drilled sintered refractories can be readily coated with platinum and platinum group metals, and that the infill of the drilled slots and holes creates posts or pegs which promote bond strengths greater than the mechanical strength of many sintered refectories themselves. Utilisation of this new preparation method can therefore provide an improved basis for coating in these geometrically challenging configurations. An example of such a coating is shown in Example 7.

It will be readily understood that the skilled person may apply the present invention by modifying one or more of the specified details whilst still gaining the benefit of the invention.

The invention will now be described by way of Example.

### EXAMPLE 1

### Electron Beam Sculpted Fusion Cast AZS Ceramic; ER 1711

Patterns 1 to 11 were prepared using the EB gun inside a vacuum chamber on a single block of fusion cast ceramic ER1711. The specific conditions of the processing were recorded and defined, but since these are specific to the particular EB gun and equipment, these conditions are not defined here. In practice the conditions required to define any selected pattern would need to be defined for the specific EB unit. The different patterns of this example are generically defined in Table I.

| **Table I** | |
|---|---|
| **Patch** | **Pattern** |
| 1 | Short lines, basket weave |
| 2 | Short lines, basket weave |
| 3 | Short lines, basket weave |
| 4 | Lines unbroken? |
| 5 | Lines unbroken? |
| 6 | Short lines, basket weave |
| 7 | Faint lines |
| 8 | Square grid of holes |
| 9 | Square grid of holes |
| 10 | Rows of holes |
| 11 | Square grid of holes |

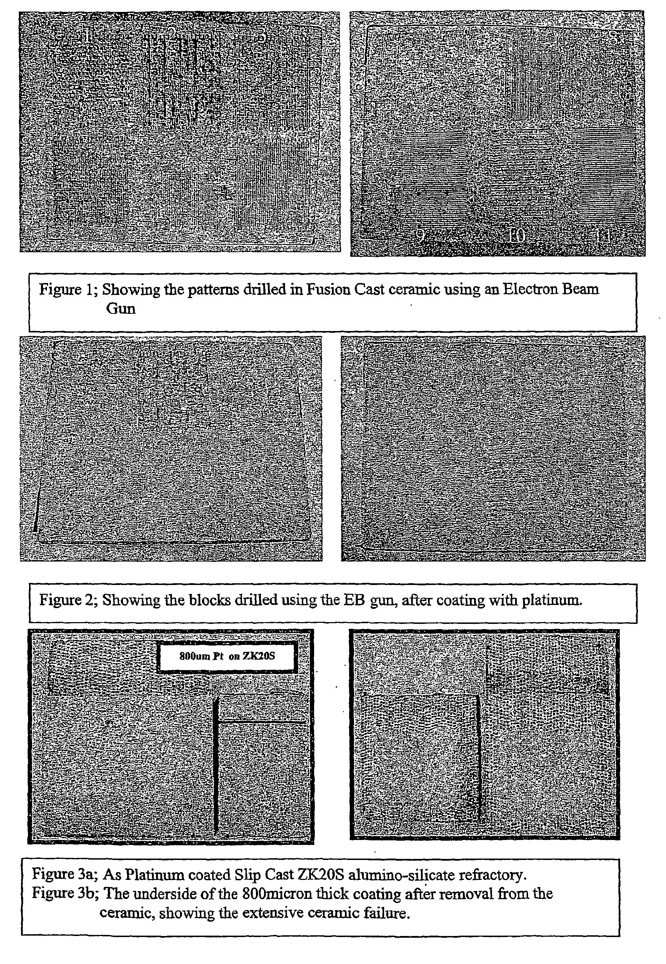

The level of ceramic movement from the zones of highest beam energy was considered extreme for some pattern types, specifically the weave and slot patterns. As a result in this experiment the decision was made to grit blast the as treated surfaces. The images shown in Figure 1 are of the surfaces after the grit blasting.

The grit blasted surfaces were coated with platinum by flame spraying, using the same operating conditions as would be normal for coating sintered refractories. The results of this can be seen in Figure 2.

The coatability was excellent with the pattern being less important than having disrupted the surface very significantly to create holes or slots. The additional benefit of the strong bond between coating and "pattern" was a carry over to the untreated areas of ceramic between the treated patches, where is appears that the bonding generated by the treatment has reduced interfacial stresses sufficiently to allow these regions also to be satisfactorily bonded.

### EXAMPLE 2

### Electron Beam Sculpted Fusion Cast AZS Ceramic; ER 1711

| **EB Preparation** | **Coating** **Thickness** **Achieved** | **Metal / Alloy** | **Coating Adhesion** |
|---|---|---|---|
| Pattern 8 of Example 1 | 800 microns | Platinum | Well bonded |
| Pattern 9 of Example 1 | 800 microns | Platinum | Excellent |
| Pattern 11 of Example 1 | 800 microns | Platinum | Excellent |

### EXAMPLE 3

### Electron Beam Sculpted Fusion Cast AZS Ceramic; Fused Zirconia

| **EB Preparation** | **Coating** **Thickness** **Achieved** | **Metal / Alloy** | **Coating Adhesion** |
|---|---|---|---|
| Slots | 400 microns | Platinum | Well bonded |
| Ditto | 400 microns | 10%Rh-Pt | Excellent |

### EXAMPLE 4

### Laser Sculpted Fusion Cast AZS Ceramic; ER 1681

| **Preparation** | **Coating** **Thickness** **Achieved** | **Metal / Alloy** | **Coating Adhesion** |
|---|---|---|---|
| Pattern 4 of Example 1 | 800 microns | Platinum | Well bonded |
| Pattern 5 of Example 1 | 800 microns | Platinum | Excellent |

### EXAMPLE 5

### Fibre Optic Delivered Laser Sculpted Fusion Cast AZS Ceramic; ER 1711

| **Preparation** | **Coating** **Thickness** **Achieved** | **Metal / Alloy** | **Coating Adhesion** |
|---|---|---|---|
| Slots | 300 microns | Platinum | Excellent |
| Ditto | 300 microns | Platinum | Excellent |

### EXAMPLE 6 (Comparative)

### Fusion Cast AZS Ceramic;

| **Preparation** | **Coating** **Thickness** **Achieved** | **Metal / Alloy** | **Coating Adhesion** |
|---|---|---|---|
| None | 50 to 100 microns | Platinum | Very poorly and weakly bonded |
| Grit blasted | ditto | Platinum | Poor bond |
| Grit Blasted + Ceramic Interlayer | 400 microns | Platinum | Edge Lifting |
| Grit Blasted + Ceramic Interlayer | 400 microns | Platinum | OK |

### EXAMPLE 7

### Slip Cast & Sintered Refractory; ZK20S

| **Preparation** | **Coating** **Thickness** **Achieved** | **Metal / Alloy** | **Coating Adhesion** |
|---|---|---|---|
| Laser Treated; Pattern 1 - drilled holes | 800 microns | Platinum | Superb |

After the coating had been evaluated, it was removed by mechanical stripping, to assess the bond strength. Figure 3a & b that shows the as coated ceramic and the underside of the coating after stripping. It can clearly be seen that the interface between the coating and the ceramic has been maintained, but the ceramic has failed deep within itself. Clearly this level of adhesion is extraordinary and lends itself to application of coatings for problem geometries.

## Claims

1. A refractory metallic-oxide ceramic part suitable for use in the processing of molten glass, said part possessing at least one surface area having a surface drilled to develop an array of slots or closed-end holes, and in which at least a portion of such treated surface carries a platinum group metal or platinum group metal alloy coating pegged thereto by the mechanical interaction between metal pegs formed as part of said coating and positioned within said slots or holes and the ceramic walls and bases of said slots or holes.

2. A ceramic part according to claim 1, wherein the refractory ceramic is a fusion-cast or engineering refractory.

3. A ceramic part according to claim 2, wherein the refractory ceramic is an iso-statically or hydro-statically pressed, and sintered refractory.

4. A ceramic part according to claim 1, 2 or 3, in which the ceramic is composed of one or more of silica, alumina, zirconia and magnesia, and is preferably an AZS refractory.

5. A ceramic part according to claim 1, wherein the refractory ceramic is a slip-cast and sintered refractory ceramic.

6. A ceramic part according to claim 5, wherein the treated surface is a concave surface.

7. A ceramic part according to any one of the preceding claims, wherein the metal is platinum or a platinum alloy.

8. A ceramic part according to any one of the preceding claims, wherein the film is of thickness from about 200 to 500 microns.

9. A furnace incorporating a metal-coated ceramic part according to any one of the preceding claims.

10. A furnace according to claim 9, wherein the metal film is connected to a source of electricity and provides resistance heating when in operation.

11. A method of metal coating a metallic-oxide refractory part, comprising treating at least one surface area of said part using a high energy beam to remove a portion of surface area, to form a plurality of slots or closed-end holes which form an effective bonding surface, and subsequently depositing a coating of a platinum group metal or alloy thereof, onto the bonding surface to provide mechanical interaction between metal pegs formed as part of said coating and positioned within said slots or holes and the ceramic walls and bases of said slots or holes.

12. A method according to claim 11, wherein the high energy beam is an electron beam.

13. A method according to claim 11, wherein the high energy beam is a laser beam.

14. A method according to any one of claims 11 to 13, wherein the metal is deposited by combustion flame spraying.

15. A method according to any one of claims 11 to 14, wherein the thickness of metal deposited is from about 200 to 500 microns.

## Patentansprüche

1. Feuerfestes Metalloxid-Keramikelement, geeignet zur Verwendung bei der Verarbeitung von Glasschmelze, wobei das Element mindestens einen Oberflächenbereich besitzt, der eine bebohrte Oberfläche zur Schaffung einer Anordnung von Schlitzen bzw. endseitig geschlossenen Löchern aufweist, und bei dem zumindest ein Teil einer solchen behandelten Oberfläche eine aus einem Platingruppenmetall oder einer Platingruppenmetalllegierung bestehende Beschichtung trägt, die daran steckt durch die mechanische Wechselwirkung zwischen den als Teil der Beschichtung gebildeten und in den Schlitzen bzw. Löchern positionierten Metallzapfen und den keramischen Wänden und Unterteilen der Schlitze bzw. Löcher.

2. Keramikelement nach Anspruch 1, wobei die feuerfeste Keramik ein schmelzgegossenes oder technisches feuerfestes Material ist.

3. Keramikelement nach Anspruch 2, wobei die feuerfeste Keramik ein isostatisch oder hydrostatisch gepresstes und gesintertes feuerfestes Material ist.

4. Keramikelement nach Anspruch 1, 2 oder 3, wobei die Keramik aus einem oder mehreren von Siliciumdioxid, Aluminiumoxid, Zirconiumdioxid und Magnesiumoxid besteht und vorzugsweise ein feuerfestes AZS-Material ist.

5. Keramikelement nach Anspruch 1, wobei die feuerfeste Keramik eine schlickergegossene und gesinterte feuerfeste Keramik ist.

6. Keramikelement nach Anspruch 5, wobei die behandelte Oberfläche eine konkave Oberfläche ist.

7. Keramikelement nach irgendeinem der vorangehenden Ansprüche, wobei das Metall Platin oder eine Platinlegierung ist.

8. Keramikelement nach irgendeinem der vorangehenden Ansprüche, wobei der Film eine Dicke von ungefähr 200 bis 500 Mikrometer aufweist.

9. Ofen mit einem metallbeschichteten Keramikelement nach irgendeinem der vorangehenden Ansprüche.

10. Ofen nach Anspruch 9, wobei der Metallfilm mit einer Stromquelle verbunden ist und eine Widerstandserwärmung während des Betriebs bereitstellt.

11. Verfahren zum Metallbeschichten eines feuerfesten Metalloxid-Elements, umfassend das Behandeln mindestens eines Oberflächenbereichs des Elements unter Verwendung eines energiereichen Strahls zum Entfernen eines Teils des Oberflächenbereichs, um mehrere Schlitze bzw. endseitig geschlossene Löcher zu bilden, die eine wirksame Haftfläche bilden; und anschließend das Abscheiden einer Beschichtung aus einem Platingruppenmetall oder einer Legierung davon auf der Haftfläche, um eine mechanische Wechselwirkung zwischen den als Teil der Beschichtung gebildeten und in den Schlitzen bzw. Löchern positionierten Metallzapfen und den keramischen Wänden und Unterteilen der Schlitze bzw. Löcher bereitzustellen.

12. Verfahren nach Anspruch 11, wobei der energiereiche Strahl ein Elektronenstrahl ist.

13. Verfahren nach Anspruch 11, wobei der energiereiche Strahl ein Laserstrahl ist.

14. Verfahren nach irgendeinem der Ansprüche 11 bis 13, wobei das Metall durch Verbrennungsflammspritzen abgeschieden wird.

15. Verfahren nach irgendeinem der Ansprüche 11 bis 14, wobei die Dicke des abgeschiedenen Metalls ungefähr 200 bis 500 Mikrometer beträgt.

## Revendications

1. Pièce de céramique réfractaire d'oxyde métallique convenant pour une utilisation dans le traitement du verre fondu, ladite pièce possédant au moins une surface de contact ayant une surface perforée pour développer un réseau de fentes ou de trous fermés à une extrémité, et dans laquelle au moins une partie d'une telle surface traitée porte un métal du groupe du platine ou un revêtement d'alliage de métal du groupe du platine chevillé à celle-ci par l'interaction mécanique entre les chevilles métalliques formées comme partie dudit revêtement et placées au sein desdites fentes ou trous et les parois et bases de céramique desdites fentes ou trous.

2. Pièce de céramique selon la revendication 1, dans laquelle la céramique réfractaire est un réfractaire coulé par fusion ou technique.

3. Pièce de céramique selon la revendication 2, dans laquelle la céramique réfractaire est un réfractaire pressé selon un mode isostatique ou hydrostatique, et fritté.

4. Pièce de céramique selon la revendication 1, 2 ou 3, dans laquelle la céramique est composée d'un ou plusieurs parmi la silice, l'alumine, le zircone et la magnésie, et est de préférence un réfractaire AZS.

5. Pièce de céramique selon la revendication 1, dans laquelle la céramique réfractaire est une céramique réfractaire coulée en barbotine et frittée.

6. Pièce de céramique selon la revendication 5, dans laquelle la surface traitée est une surface concave.

7. Pièce de céramique selon l'une quelconque des revendications précédentes, dans laquelle le métal est le platine ou un alliage de platine.

8. Pièce de céramique selon l'une quelconque des revendications précédentes, dans laquelle le film est d'une épaisseur d'environ 200 à 500 microns.

9. Four incorporant une pièce de céramique recouverte de métal selon l'une quelconque des revendications précédentes.

10. Four selon la revendication 9, dans lequel le film métallique est relié à une source d'électricité et fournit une résistance au chauffage lorsqu'il est en marche.

11. Procédé de revêtement métallique d'une pièce d'oxyde métallique réfractaire, comprenant le traitement d'au moins une surface de contact de ladite pièce en utilisant un faisceau de haute énergie pour supprimer une partie de la surface de contact, afin de former une pluralité de fentes ou de trous fermés à une extrémité qui forment une surface de liaison efficace, et le dépôt par la suite d'un revêtement d'un métal du groupe du platine ou d'un alliage de celui-ci, sur la surface de liaison afin de fournir une interaction mécanique entre les chevilles métalliques formées comme partie dudit revêtement et placées au sein desdites fentes ou trous et les parois et bases de céramique desdites fentes ou trous.

12. Procédé selon la revendication 11, dans lequel le faisceau de haute d'énergie est un faisceau d'électrons.

13. Procédé selon la revendication 11, dans lequel le faisceau de haute énergie est un faisceau laser.

14. Procédé selon l'une quelconque des revendications 11 à 13, dans lequel le métal est déposé par projection à la flamme en combustion.

15. Procédé selon l'une quelconque des revendications 11 à 14, dans lequel l'épaisseur de métal déposé est d'environ 200 à 500 microns.
